(19) Europäisches Patentamt
European Patent Office
Office européen des brevets

(11) Veröffentlichungsnummer: **0 364 693**
**A1**

(12) # EUROPÄISCHE PATENTANMELDUNG

(21) Anmeldenummer: **89115255.5**

(22) Anmeldetag: **18.08.89**

(51) Int. Cl.5: **C08L 77/00 , C08L 71/12 , C08K 5/17 , C08L 23/00 , C08L 25/04**

(30) Priorität: **13.10.88 DE 3834912**

(43) Veröffentlichungstag der Anmeldung: **25.04.90 Patentblatt 90/17**

(84) Benannte Vertragsstaaten: **BE DE FR GB IT NL**

(71) Anmelder: **HÜLS AKTIENGESELLSCHAFT**
**- RSP Patente / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen-Merfeld(DE)**
Erfinder: **Mügge, Joachim, Dr.**
**Droste-Hülshoff-Strasse 17**
**D-4358 Haltern(DE)**

(54) **Thermoplastische Formmassen auf Basis von Polyphenylenethern und Polyamiden und ihre Herstellung.**

(57) Thermoplastische Formmassen auf Basis von Polyphenylenethern und Polyamiden und ihre Herstellung.

Ziel der Erfindung war die Herstellung von Formmassen auf Basis von Polyphenylenethern und Polyamiden, die sich durch eine hohe Zähigkeit, eine hohe Lösemittelbeständigkeit sowie eine hohe Wärmeformbeständigkeit auszeichnen.

Die jetzt gefundenen Formmassen enthalten
- 1 - 60 Teile Polyphenylenether,
- 40 - 100 Teile Polyamide und
- 0,1 - 5 Teile mindestens eines Asparaginsäurederivats.

Die Formmassen werden zur Herstellung technischer Artikel wie z. B. Rohre, Platten oder Gehäuse verwendet.

EP 0 364 693 A1

# Thermoplastische Formmassen auf Basis von Polyphenylenethern und Polyamiden und ihre Herstellung

Polyphenylenether (PPE) sind technische Hochleistungsthermoplaste mit hohen Schmelzviskositäten und Erweichungspunkten. Sie eignen sich für zahlreiche technische Anwendungen, bei denen es auf Beständigkeit bei hohen Temperaturen ankommt (vgl. US-PSS 3 306 874, 3 306 875, 3 257 357 und 3 257 358). Gewisse Eigenschaften der Polyphenylenether sind für technische Anwendungen unerwünscht. Beispielweise sind Formteile aus Polyphenylenethern aufgrund schlechter Schlagzähigkeit spröde.

Nachteilig sind auch die hohen Schmelzviskositäten, die zu Schwierigkeiten bei der Verarbeitung führen. Es ist zu berücksichtigen, daß Polyphenylenether bei hohen Temperaturen zu Instabilität und Verfärbung neigen.

Polyphenylenether sind in vielen organischen Lösemitteln löslich oder quellen sehr stark. Dies hat zur Folge daß sie für Anwendungen, bei denen sie in Kontakt mit solchen Lösemitteln kommen, nicht geeignet sind.

Es ist bekannt, daß die Eigenschaften von Polyphenylenetherharzen durch Abmischen mit anderen Polymeren verbessert werden können. So haben z. B. Abmischungen von Polyphenylenethern mit schlagzähen Polystyrolen eine größere technische Bedeutung erlangt (vgl. DE-PSS 21 19 301 und 22 11 005). Diese Abmischungen lassen sich gut zu Formteilen mit ausreichender Zähigkeit verarbeiten, weisen jedoch den Nachteil auf, daß mit zunehmendem Polystyrolgehalt die Wärmeformbeständigkeit abnimmt. Auch bei diesen Abmischungen ist die Lösemittelbeständigkeit unbefriedigend.

Abmischungen von Polyphenylenethern mit Polyamiden weisen zwar eine gute Fließfähigkeit und eine gute Lösemittelbeständigkeit auf (DE-OS 16 94 290, JP-A-78/47 390), es werden aber in der Regel spröde Pro dukte erhalten, da die beiden Komponenten schlecht ineinander dispergierbar sind. Aromatische Polyamide, wie sie beispielsweise gemäß EP-OS 0 131 445 eingesetzt werden, lassen sich zudem mit Polyphenylenethern schlecht verarbeiten. Eine bessere Verträglichkeit der beiden Phasen wird durch eine Funktionalisierung des Polyphenylenethers, z. B. mit Maleinsäureanhydrid in Gegenwart von Radikalbildnern, erreicht (JP-OS 74/66 452). Die Verwendung von Radikalbildnern kann jedoch zu einer unerwünschten und unkontrollierten partiellen Vergelung de PPE-Phase führen.

Es ist daher vorgeschlagen worden, die Verträglichkeit beider Polymeren durch Zusatz einer ausreichenden Menge eines Fließmittels, z. B. eines organischen Phosphats (vgl. EP-OS 0 129 825) oder eines Diamids (vgl. EP-OS 0 115 218), zu erhöhen. Solche Lösungen vermögen nicht zu überzeugen, da die verbesserte Verträglichkeit mit einer reduzierten Wärmeformbeständigkeit erkauft werden muß. Den gleichen Nachteil weisen Formmassen auf, denen Copolymere aus Styrol und ungesättigten Säurederivaten zugesetzt worden sind (vgl. EP-OS 0 046 040).

Gegenstand der EP-PS 0 024 120 sind Harzmassen, die aus einem Polyphenylenether, einem Polyamid, einer dritten Komponente und gegebenenfalls hochmolekularen Kautschuk-Polymeren bestehen. Als dritte Komponente wird eine flüssiges Dienpolymer, ein Epoxid oder eine Verbindung mit einer Doppel- oder Dreifachbindung und einer functionellen Gruppe (wie z. B. Säure, Anhydrid, Ester, Amino- oder Alkoholgruppe) eingesetzt. Die Zähigkeit der erhaltenen Harzmassen reicht aber für viele Anwendungen nicht aus. Es kommt hinzu, daß die meisten angegebenen Verträglichkeitsvermittler, wie z. B. Maleinsäureanhydrid, toxisch und leicht flüchtig sind. Infolgedessen kommt es bei der Verarbeitung zu einer starken Belästigung des Bedienungspersonals.

In der JP-OS 74/86 653 wird ein Verfahren beschrieben, wonach man 100 Teile Polyphenylenether mit 10 bis 300 Teilen einer Mischung aus 50 bis 99 % Styrol und 50 bis 1 % ungesättigten Carbonsäuren oder deren Anhydriden radikalisch pfropft. Das Produkt wird mit Polyamiden abgemischt; die entstehenden Formmassen weisen zwar sehr gute mechanische Eigenschaften auf, doch sinkt infolge des beträchtlichen Polystyrolanteils die Wärmeformbeständigkeit stark ab.

In der WO 85/05 372 wird eine Funktionalisierung von Polyphenylenethern durch Umschmelzen mit Hydroxypolycarbonsäuren bzw. deren Derivaten beschrieben. Nach Abmischen mit Polyamiden erhält man Formmassen, deren Reißdehnungs- und Kerbschlagwerte auf eine nicht befriedigende Anbindung an den Phasengrenzflächen schließen lassen. Die Verwendung von starken organischen Säuren sowie die Anwesenheit von Wasser, das bei der Funktionalisierung gebildet wird, führen dazu, daß man im Dauerbetrieb mit ernsten Korrosionsproblemen rechnen muß.

Analog dazu wird in der WO 86/02 086 ein Polyphenylenether durch Reaktion mit Trimellitsäureanhydridchlorid in Lösung funktionalisiert; die Blends mit Polyamiden scheinen zwar tendenziell besser als im vorherigen Fall zu sein, jedoch weist dieses Verfahren den großen Nachteil auf, daß entweder Chlorwasserstoff entsteht oder daß die Polyphenylenetherlösung - bei Zusatz eines tertiären Amins - beträchtliche

Mengen an Chloriden enthält, die wegen ihrer korrisiven Wirkung auf Maschine und Form vor dem Abmischen restlos abgetrennt werden müssen. Eine Direktisolation des Polyphenylenethers durch Abziehen des Lösungsmittels, die dem Ausfällen mit Methanol wirtschaftlich überlegen ist, ist in diesem Fall nicht möglich.

Ein Ziel der vorliegenden Erfindung sind Formmassen, die leicht verarbeitbar sind und sich zur Herstellung von Formteilen eignen, welche einerseits lösemittelbeständig und hoch schlagzäh sind und andererseits eine hohe Wärmeformbeständigkeit aufweisen.

Es wurden jetzt Formmassen gefunden, die diesen Ansprüchen gerecht werden und folgende Komponenten enthalten:

a) 1 - 60 Teile Polyphenylenether,
b) 40 - 100 Teile Polyamide und
c) 0,1 - 5 Teile mindestens eines Asparaginsäurederivats der Formel

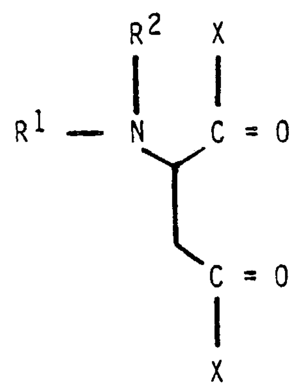

mit X = OH, OR, $NR_1R_2$, wobei
- R ein Alkyl- oder Arylrest mit bis zu 10 C-Atomen ist und
- $R_1$ und $R_2$ unabhängig voneinander Wasserstoff, einen Alkyl Cycloalkyl-, Hydroxyalkyl- oder Arylrest mit jeweils bis C-Atomen oder einen Acyl- oder substituierten Sulfonylrest mit jeweils bis zu 14 C-Atomen bedeuten, oder $R_1$ und $R_2$ zusammen für einen Tetra- oder Pentamethylenrest stehen,

d) 0 - 30 Teile eines Styrolharzes,
e) 0 - 30 Teile eines Schlagzähmachers.

Es ist - zur Erzielung der gewünschten Eigenschaften - wesentlich, daß zunächst in der Wärme eine Vorformmasse aus dem Polyphenylenether, der Asparaginsäure bzw. deren Derivat und gegebenenfalls dem Styrolharz und dem Schlagzähmacher hergestellt und anschließend diese Vorformmasse mit dem Polyamid abgemischt wird.

Als Polyphenylenether kommen in erster Linie Polyether auf Basis von 2,6-Dimethylphenol in Frage, wobei der Ethersauerstoff der einen Einheit an den Benzolkern der benachbarten Einheit gebunden ist (vgl. Anspruch 3). Grundsätzlich kommen zur Herstellung der Polyphenylenether auch o,o′-Di-n-alkylphenole in Frage, deren Alkylreste vorzugsweise höchstens 6 C-Atome besitzen. Ferner eignen sich Phenole, die lediglich in einer ortho-Stellung durch einen tertiären Alkylrest mit bis zu 6 C-Atomen, insbesondere einen tertiären Butylrest, substituiert sind. Jeder der aufgeführten monomeren Phenole kann in 3- und in 5-Stellung durch eine $C_{1-6}$-Alkylgruppe substituiert sein (vgl. Anspruch 2). Selbstverständlich können auch Gemische der hier erwähnten monomeren Phenole eingesetzt werden.

Die Polyphenylenether können z. B. in Gegenwart von komplexbildenden Mitteln, wie Kupferbromid und Morpholin, aus den Phenolen hergestellt werden (vgl. DE-OSS 32 24 692 und 32 24 691). Die Viskositätszahlen, bestimmt nach DIN 53 728 in Chloroform bei 25 °C, liegen im Bereich von 20 bis 80 $cm^3/g$.

Als Polyamide kommen Homo- und Copolymere in Frage, die vorzugsweise teilkristallin und ausschließlich aliphatischer Struktur sind. Insbesondere seien hier die Polyamide PA 6, PA 46, PA 66, PA 612, PA 1010, PA 1023, PA 11 und PA 12 aufgeführt. Geeignet sind aber auch gemischt aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John Wiley & Sons (1982), Seiten 328 bis 435). Das Zahlenmittel des Molekulargewichts der Polyamide liegt über 5 000, vorzugsweise über 10 000. Die Obergrenze wird durch die Verarbeitbarkeit bestimmt; bei den üblichen Polyamiden liegt sie bei etwa 50 000.

Das Asparaginsäurederivat der Formel

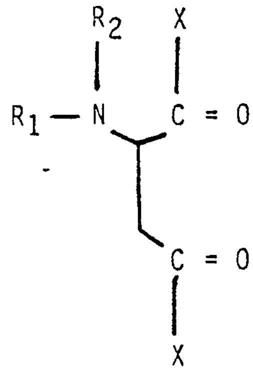

wird bevorzugt in einer Menge von 1 bis 5 Gew.-% bezogen auf den Polyphenylenether verwendet. In Frage kommen z. B. folgende Verbindung: Asparaginsäure, N-Acetylasparaginsäure, Phthalimidobernsteinsäure, N-Propylasparaginsäure, N-(2-Hydroxyethyl)-asparaginsäure sowie deren Ester oder Amide.

Die erfindungsgemäßen Formmassen können ein Styrolharz und/oder einen Schlagzähmacher enthalten. Als geeignete Styrolharze sind im Rahmen dieser Erfindung glasklares Polystyrol, mit Kautschuk schlagzäh modifiziertes Polystyrol (HIPS) oder Styrol-Acrylnitril-Copolymere anzu sehen. Es ist jedoch zu beachten, daß durch Styrolharze im allgemeinen die Wärmestandfestigkeit herabgesetzt wird.

Geeignete Schlagzähmacher sind, gegebenenfalls funktionalisierte, Kautschuke und gewisse, gegebenenfalls funktionalisierte, teilkristalline Thermoplaste, die für ihre schlagzähigkeitserhöhende Wirkung bekannt sind. In Frage kommen beispielsweise Ethylen-Propylen-Copolymere (EPM), Ethylen-Propylen-Dien-Terpolymere (EPDM), Polybutadien, Polypentenylen, Polyoctenylen, Polyethylen, statistische Styrol-Butadien-Copolymere (z. B DURANIT$^R$ der Hüls AG) oder Styrol-Butadien-Blockcopolymere, die ggf. hydriert sein können (z. B KRATON$^R$ der Shell Chemical Co.) oder deren Mischungen. Die Funktionalisierung ist grundsätzlich bekannt; sie kann z. B. mit Maleinsäureanhydrid (vgl. US-PS 3 884 882) oder mit den gleichen Asparaginsäurederivaten (vgl. deutsche Patentanmeldung P 38 04 185) durchgeführt werden.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu etwa 25 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. In Frage kommen Halogen enthaltende organische Verbindungen, wie sie z. B. in der Monographie von H. Vogel "Flammfestmachen von Kunststoff", Hüthig-Verlag, 1966, auf den Seiten 94 bis 192 beschrieben werden. Man kann aber auch halogenierte Polymere wie z. B. halogenierte Polyphenylenether (siehe DE-OS 33 34 068) oder bromierte Oligo- bzw. Polystyrole verwenden. Die Verbindungen sollen mehr als 30 Gew.-% Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Men gen von 0,5 bis 10 Gew.-%, bezogen auf die thermoplastischen Massen, eingesetzt.

Als Verstärkungsmittel eignen sich besonders Glas- und Kohlenstofffasern.

Geeignete Stabilisatoren umfassen organische Phosphite, wie z. B. Didecylphenylphosphit und Trilaurylphosphit, sterisch gehinderte Phenole sowie Tetramethylpiperidin, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die Herstellung der erfindungsgemäßen thermoplastischen Formmassen erfolgt bevorzugt in der Weise, daß zunächst eine Vorformmasse aus allen Komponenten mit Ausnahme des Polyamids hergestellt und erst anschließend das Polyamid zugesetzt wird. Die Herstellung der Vorformmasse erfolgt bevorzugt in der Schmelze bei Temperaturen zwischen 200 und 320 °C. Es ist auch möglich, die Vermischung in flüssiger Phase durchzuführen oder einzelne Komponenten in Form einer Lösung zuzusetzen. Beispielsweise kann das Asparaginsäurederivat einer bei der Herstellung von PPE anfallenden konzentrierten Lösung in einem organischen Lösemittel zugesetzt werden.

Die Vereinigung der Polyamide mit der Vorformmasse erfolgt durch Mischen der beiden Schmelzen in einem gut knetenden Aggregat bei 250 bis 350 °C, vorzugsweise bei 270 bis 310 °C. Es ist vorteilhaft, die beiden Komponenten trocken vorzumischen und zu extrudieren. Man kann aber auch das Polyamid in die

Polyphenylenetherschmelze eindosieren.

Der Schlagzähmacher kann auch erst im 2. Mischungsschritt, d. h. zusammen mit dem Polyamid, zugesetzt werden. In diesem Fall ist es möglich, eine Vorcompoundierung mit dem Polyamid durchzuführen.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die erfindungsgemäßen Formmassen zeichnen sich gegenüber den Produkten des Standes der Technik durch eine hohe Zähigkeit bei guter Wärmeformbeständigkeit und Lösemittelbeständigkeit aus.

Die Viskositätszahl (J) des Polyphenylenethers wurde nach DIN 53 728 bei 25 °C in Chloroform (Konzentration 5 g/l) in $cm^3/g$ gemessen.

Die Kerbschlagzähigkeit ($a_K$) der Formmassen wurde nach DIN 53 453 an bei 290 °C gespritzten Normkleinstäben mit Rechteckkerbe bei Raumtemperatur gemessen.

Die Reißdehnung ($Epsilon_R$) wurde nach DIN 53 455 an bei 290 °C gespritzten Schulterstäben bestimmt.

Die Vicat-Erweichungstemperatur B/50 nach DIN 53 699 wurde an bei 290 °C gespritzten Formkörpern von 4 mm Dicke bestimmt.

Teile bedeuten im Rahmen dieser Erfindung Gewichtsteile.

1. Polyphenylenether

Beispiel 1: Mischung aus Polyphenylenether und Polyoctenylen

Den Polyphenylenether erhält man durch oxidative Kupplung von 2,6-Dimethylphenol, Abstoppen der Reaktion bei dem gewünschten J-Wert und anschließende Reaktionsextraktion gemäß DE-OSS 33 13 864 und 33 32 377, wobei ein J-Wert von 52 $cm^3/g$ eingestellt wird.

Eine Lösung von 90 Teilen dieses Polyphenylenethers in 800 Teilen Toluol wird mit einer Lösung von 10 Teilen Polyoctenylen (VESTENAMER$^R$ 8012 der Firma Hüls AG, D-4370 Marl) in 50 Teilen Toluol vereinigt. Die Lösung wird auf 70 % aufkonzentriert; das noch verbleibende Lösemittel wird mittels eines Entgasungsextruders entfernt. Die Mischung wird granuliert und getrocknet.

2. Verträglichkeitsvermittler

Beispiel 2.1: DL-Asparaginsäure, Reinheitsgrad 98 % der Firma Aldrich, Milwaukee, USA.

Beispiel 2.2: DL-N-(2-Hydroxyethyl)asparaginsäure

Aus 116,0 g Maleinsäure und 61,0 g Ethanolamin wird bei 160 °C analog zu US-PS 2 200 220 die entsprechende substituierte Asparaginsäure hergestellt.

Beispiel 2.3: DL-N-Acetylasparaginsäure

Aus DL-Asparaginsäure und Essigsäureanhydrid wird gemäß C. C. Barker, J. Chem. Soc. 1953, S. 453 die entsprechende substituierte Asparaginsäure hergestellt.

Beispiel 2.4: DL-N-(2-Hydroxyethyl)asparaginsäuredi-n-butylester

Durch Michael-Addition von Ethanolamin an Maleinsäuredibutylester (Umsetzung der beiden Reaktionskomponenten in äquimolaren Mengen 3 Tage bei 25 °C) erhält man den entsprechende substituierten Asparaginsäureester.

3. Formmassen und Formteile

Beispiel 3.1

100 Teile der Mischung gemäß Beispiel 1 werden in 150 Teilen Toluol gelöst und anschließend mit einer Aufschlämmung von 3,0 Teilen gepulverter DL-Asparaginsäure in 20 Teilen Methanol versetzt. Die Lösung wird auf 70 % aufkonzentriert; das noch verbliebene Lösemittel wird mittels eines Entgasungsextruders bei 300 °C entfernt. Das Produkt wird granuliert und getrocknet.

41,2 Teile dieser Vorformmasse werden mit 60 Teilen Polyamid 12 (VESTAMID ® X 4887) in einem Zweischneckenextruder bei 290 °C gemischt, stranggranuliert und getrocknet. Das Produkt wird zu Normkörpern verspritzt und geprüft.

Beispiel 3.2

Analog zu Beispiel 3.1 wird eine Formmasse unter Verwendung von 3,0 Teilen DL-N-(2-Hydroxyethyl)-asparaginsäure (gemäß Beispiel 2.2) hergestellt.

Beispiel 3.3

100 Teile der Mischung gemäß Beispiel 1 werden mit einer Lösung von 3,0 Teilen DL-N-Acetylasparaginsäure (gemäß Beispiel 2.3) in einer Mischung aus 10 Teilen Aceton und 10 Teilen Toluol imprägniert. Nach dem Einziehen der Lösung läßt man 24 Stunden stehen und trocknet anschließend bei 80 °C in einem Vakuumtrockenschrank. Danach wird auf einem Entgasungsextruder bei 300 °C umgeschmolzen, granuliert und getrocknet.

41,2 Teile dieser Vorformmasse werden mit einem Blend aus 54 Teilen VESTAMID® X 4887 und Teilen Ethylen-Propylen-Kautschuk (BUNA® AP 301 der Bunawerke Hüls GmbH, D-4370 Marl), der mit 1 % Maleinsäureanhydrid und 0,2 % Dicumylperoxid funktionalisiert wurde, in einem Zweischnekkenextruder bei 290 °C gemischt, stranggranuliert und getrocknet. Das Produkt wird zu Normkörpern verspritzt und geprüft.

Beispiel 3.4

Analog zu Beispiel 3.3 stellt man unter Verwendung von 3,0 Teilen DL-N-(2-Hydroxyethyl)-asparaginsäuredibutylester (gemäß Beispiel 2.4) eine Formmasse und Formteile her.

Beispiel 3.5

100 Teile Polyphenylenether werden mit einer Mischung aus 3,0 Teilen DL-N-(2-Hydroxyethyl)-asparaginsäuredibutylester (gemäß Beispiel 2.4) und 5,0 Teilen Toluol imprägniert. Analog zu Beispiel 3.3 wird getrocknet, umgeschmolzen, granuliert und getrocknet. 40 Teile der so erhaltenen Vorformmasse werden mit 60 Teilen VESTAMID® X 4887 analog zu Beispiel 3.3 gemischt.

Vergleichsbeispiel A

40 Teile der Mischung gemäß Beispiel 1 werden mit 60 Teilen Polyamid 12 (VESTAMID® X 4887 der Hüls AG, D-4370 Marl) in einem Zweischnekkenextruder bei 290 °C gemischt, stranggranuliert und getrocknet. Das Produkt wird zu Normkörpern verspritzt und geprüft.

Tabelle 1

Zusammensetzung und Eigenschaften der Formmassen

| Beispiel | Vorformmasse | | | | abgemischt mit | | $a_K$ ($kJ/m^2$) | $Epsilon_R$ (%) | Vicattemperatur B/50 (°C) |
|---|---|---|---|---|---|---|---|---|---|
| | Polyphenylenether (Teile) | Polyoctenylen (Teile) | Asparaginsäure bzw. -derivat | | PA 12 (Teile) | EPM-g-MSA[1] (Teile) | | | |
| | | | gemäß Beispiel | Teile | | | | | |
| A | 36 | 4 | | - | 60 | - | 2 | 2 | 162 |
| 3.1 | 36 | 4 | 2.1 | 1,2 | 60 | - | 14 | 37 | 164 |
| 3.2 | 36 | 4 | 2.2 | 1,2 | 60 | - | 16 | 49 | 164 |
| 3.3 | 36 | 4 | 2.3 | 1,2 | 54 | 6 | 22 | 43 | 163 |
| 3.4 | 36 | 4 | 2.4 | 1,2 | 54 | 6 | 27 | 52 | 164 |
| 3.5 | 40 | - | 2.4 | 1,2 | 60 | - | 7 | 32 | 164 |

[1] mit Maleinsäureanhydrid funktionalisiertes EPM

## Ansprüche

1. Thermoplastische Formmassen auf Basis von Polyphenylenethern und Polyamiden,
dadurch gekennzeichnet,
daß sie folgende Komponenten enthalten:
a) 1 - 60 Teile Polyphenylenether,
b) 40 - 100 Teile Polyamide,
c) 0,1 - 5 Teile mindestens eines Asparaginsäurederivats der Formel

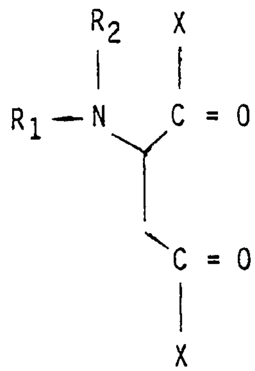

mit X = OH, OR, $NR_1R_2$, wobei
- R ein Alkyl- oder Arylrest mit bis zu 10 C-Atomen ist und
- $R_1$ und $R_2$ unabhängig voneinander Wasserstoff, einen Alkyl-, Cycloalkyl-, Hydroxyalkyl- oder Arylrest mit jeweils bis zu 10 C-Atomen oder ein Acyl- oder substituierter Sulfonylrest mit jeweils bis zu 14 C-Atomen sind oder $R_1$ und $R_2$ zusammen einen Tetra-oder Pentamethylenrest bedeuten;
d) 0 - 30 Teile eines Styrolharzes,
e) 0 - 30 Teile eines Schlagzähmachers.

2. Thermoplastische Formmassen nach Anspruch 1,
dadurch gekennzeichnet,
daß die Polyphenylenether wiederkehrende Einheiten der Formel

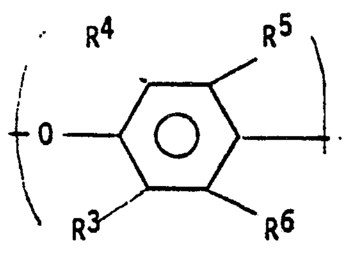

enthalten, wobei $R^5$ und $R^6$ unabhängig voneinander für einen Alkylrest mit bis zu 6 C-Atomen oder vorzugsweise Wasserstoff stehen und $R^3$ für Wasserstoff und $R^4$ für einen tertiären Alkylrest mit bis zu 6 C-Atomen steht oder $R^3$ und $R^4$ unabhängig voneinander die Bedeutung eines n-Alkylrestes mit bis zu 6 C-Atomen haben.

3. Thermoplastische Formmassen nach Anspruch 2,
dadurch gekennzeichnet,
daß die Polyphenylenether wiederkehrende Einheiten der Formel

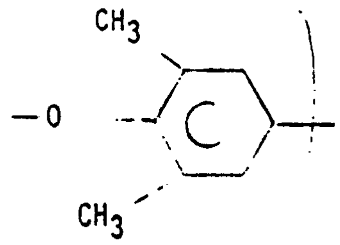

enthalten.

4. Thermoplastische Formmassen nach den Ansprüchen 1 bis 3,
dadurch gekennzeichnet,
daß die Polyphenylenether eine reduzierte spezifische Viskosität von 20 bis 80 $cm^3/g$ aufweisen.

5. Thermoplastische Formmassen nach den Ansprüchen 1 bis 4,
dadurch gekennzeichnet,
daß als Polyamid PA 6, PA 46, PA 66, PA 612, PA 1010, PA 1012, PA 11 oder PA 12 eingesetzt wird.

6. Thermoplastische Formmassen nach den Ansprüchen 1 bis 5,
dadurch gekennzeichnet,
daß das Zahlenmittel des Molekulargewichts der Polyamide über 5 000, vorzugsweise über 10 000, liegt.

7. Thermoplastische Formmassen nach den Ansprüchen 1 bis 6,
dadurch gekennzeichnet,
daß als Asparaginsäurederivat DL-Asparaginsäure eingesetzt wird.

8. Thermoplastische Formmassen nach den Ansprüchen 1 bis 7,
dadurch gekennzeichnet,
daß sie als Schlagzähmacher Polyoctenylen und/oder EP(D)M-Kautschuk enthalten.

9. Verfahren zur Herstellung der thermoplastischen Formmassen gemäß den Ansprüchen 1 bis 8,
dadurch gekennzeichnet,
daß man aus dem Polyphenylenether und ggf. einem Schlagzähmacher und/oder einem Styrolharz sowie dem Asparaginsäurederivat eine Vorformmasse herstellt und diese in einer 2. Stufe mit dem Polyamid abmischt.

10. Verfahren gemäß Anspruch 9,
dadurch gekennzeichnet,
daß man die Vorformmasse durch Mischen der Komponenten in der Schmelze bei 200 bis 320 °C herstellt.

11. Verfahren gemäß Anspruch 9,
dadurch gekennzeichnet,
daß man die Vorformmasse durch Mischen der Komponenten in Lösung und anschließendes Entfernen des Lösemittels bei Temperaturen zwischen 200 und 320 °C herstellt.

Europäisches Patentamt

# EUROPÄISCHER RECHERCHENBERICHT

Nummer der Anmeldung

EP 89 11 5255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 205 816 (HÜLS AG)<br>* Ansprüche 1-12 * | 1-11 | C 08 L 77/00<br>C 08 L 71/12<br>C 08 K 5/17<br>C 08 L 23/00<br>C 08 L 25/04 |
| A | EP-A-0 244 090 (JAPAN SYNTHETIC RUBBER Co)<br>* Ansprüche 1-24 * | 1-11 | |
| A | EP-A-0 250 760 (HÜLS AG)<br>* Ansprüche 1-9 * | 1-11 | |
| | | | **RECHERCHIERTE SACHGEBIETE (Int. Cl.5)** |
| | | | C 08 L<br>C 08 K |

Der vorliegende Recherchenbericht wurde für alle Patentansprüche erstellt

| Recherchenort | Abschlußdatum der Recherche | Prüfer |
|---|---|---|
| DEN HAAG | 16-01-1990 | GLANDDIER A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)